# EUROPEAN PATENT SPECIFICATION

(11) **EP 0 744 743 B1**
(45) Date of publication and mention of the grant of the patent: **23.01.2002**
(21) Application number: 96303573.8
(22) Date of filing: 20.05.1996
(51) Int. Cl.: G11B 23/03

(54) **Cartridge for a recording medium and a signal recording apparatus using the same**
Kassette für Aufzeichnungsmedium und Signalaufzeichnungsgerät dafür
Cassette pour support d'enregistrement et appareil d'enregistrement de signaux l'utilisant

(30) Priority: 23.05.1995 JP 12342095; 17.05.1996 JP 12294896
(43) Date of publication of application: 27.11.1996
(73) Proprietor: MATSUSHITA ELECTRIC INDUSTRIAL CO., LTD., Kadoma-shi, Osaka 571-8501 (JP)
(72) Inventor: Kawamura, Ichiro, Osaka-shi, Osaka 546 (JP); Imanaka, Ryoichi, Hirakata-shi, Osaka 573 (JP); Goto, Yoshikazu, Hirakata-shi, Osaka 573 (JP)
(74) Representative: Crawford, Andrew Birkby

(56) References cited:
- EP-A- 0 254 358
- EP-A- 0 617 425
- EP-A- 0 768 664
- GB-A- 2 253 087
- US-A- 4 618 061
- US-A- 5 093 823

## Description

The present invention relates to a cartridge housing a disk-shaped signal recordable medium and to a signal recording apparatus using this cartridge.

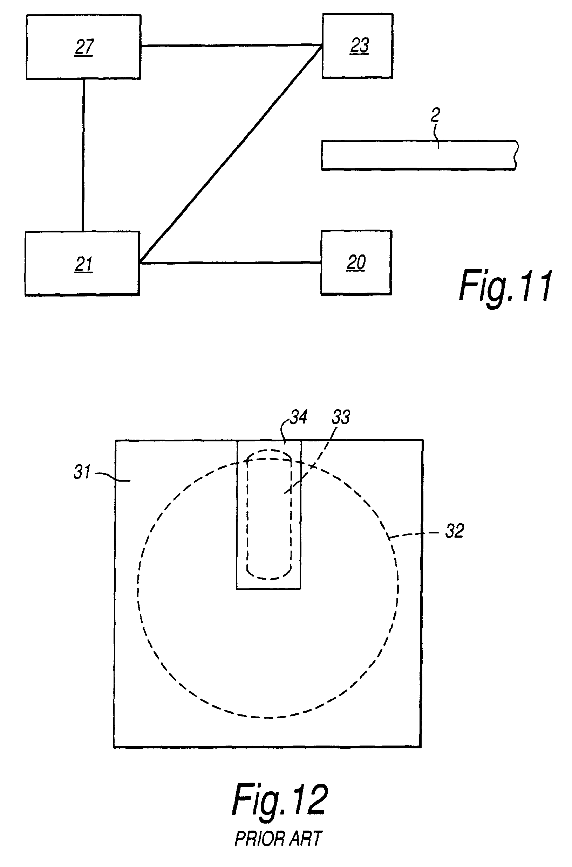

Computers and other information equipment have recently required larger and larger memory capacity and attention has been directed to the use of optical disks in order to provide such capacity. It is also common for optical disks to be mounted in cartridges and for the cartridge to be insertable and removable from the computer or other equipment in much the same way as conventional magnetic discs. The structure of a convention optical disk cartridge is explained below with reference to Fig. 12 of the drawings. Figure 12 depicts a cartridge 31 housing a signal-recordable medium 32 in the form of an optical disk and having an openable window 33 through which a signal can be recorded onto the medium 32 by a recording head (not shown) when the cartridge 31 is mounted in a signal recording apparatus. The openable window 33 is closed by a shutter 34. When the cartridge 31 is mounted in the signal recording apparatus, the shutter 34 is automatically moved aside to expose the window 33.

Since the conventional cartridge 31 housing the disk 32 must record a desired signal accurately, the disk must be protected from being contaminated by dust, a fingerprint, or against other surface defects. Consequently, the disk 32 cannot be removed from the cartridge 31.

However, such a structure of cartridge as described above cannot allow a user to remove a disk mounted in another signal apparatus where the cartridge is not needed, and yet, even if disk removable function is added, a user can neither identify whether the disk has been removed from the cartridge or not, nor recognise the possibility that the disk has become contaminated by dust or fingerprints or damaged by other defects.

If disks are used which contain defects, the signal recording apparatus will attempt to record data on a defective area of the disk and consequently cause erroneous data to be recorded. When the signal recording apparatus is capable of confirming the integrity of the recording medium so as to determine whether data signals can be recorded as normal, and if not, the apparatus is arranged to utilize another area of the disk for recording and then records the signal after the current signal is being normally recorded, it takes time for such confirmation to take place (confirming time) and this prevents the apparatus from recording signals at high speed.

An object of the present invention is to provide a cartridge which will allow a user to recognise whether a disk housed in the cartridge may have been removed from the cartridge or not. A further object is to provide a signal recording apparatus using the cartridge which can prevent recordal of a signal on defective locations on the recording medium, which defective locations have been produced due to the disk having been taken out of the cartridge.

The present invention provides a cartridge comprising a cartridge body housing a recording medium therein and being so structured as to permit recording of a signal onto said recording medium without removal of the medium from said cartridge body when said recording medium is loaded into a signal recording apparatus, and an opening provided on said cartridge body for removal of said recording medium from said cartridge body, characterised in that the cartridge includes an indicator for indicating whether said recording medium has not been removed from said cartridge and reinserted.

Preferably, the cartridge body has at least one openable window for permitting a recording head of the signal recording apparatus to access the recording medium.

The present invention further provides a signal recording apparatus comprising a detector for detecting the condition of the indicator on a cartridge as defined above whereby to determine whether said recording medium has not been removed from said cartridge and reinserted; a monitoring device responsive to said detector for searching said recording medium for defects when said detector determines that said recording medium may have been removed from said cartridge and a recording device for recording the signal onto said recording medium, said signal recording apparatus being so structured as not to record a signal onto a defective area of said recording medium.

In order that the present invention be more readily understood, embodiments thereof will now be described by way of example with reference to the accompanying drawings, in which:-
Fig. 1 depicts a cartridge according to a first embodiment of the present invention;
Figs. 2(a) to 2(d) depict the process of taking a disk out of the cartridge shown in Fig. 1;
Figs. 3(a) and 3(b) show a portion of the cartridge shown in Fig. 1 in more detail;
Fig. 4 shows a cartridge according to a second embodiment of the present invention;
Fig. 5 shows in more detail a portion of the embodiment shown in Fig. 4;
Figs. 6(a) to 6(c) show the process of taking the disk out of the cartridge shown in Fig. 4;
Figs. 7(a) and 7(b) show a modification which may be applied to a cartridge according to the present invention;
Fig. 8 shows a block diagram of a signal recording apparatus according to the present invention;
Fig. 9 shows in diagrammatic form one form of detector for use with the signal recording apparatus shown in Fig. 8;
Fig. 10 shows in diagrammatic form a further detector for use with the signal recording apparatus shown in Fig. 8;
Fig. 11 shows a block diagram of electronic equipment which may be used in conjunction with the cartridge of the present invention; and
Fig. 12 shows a conventional cartridge.

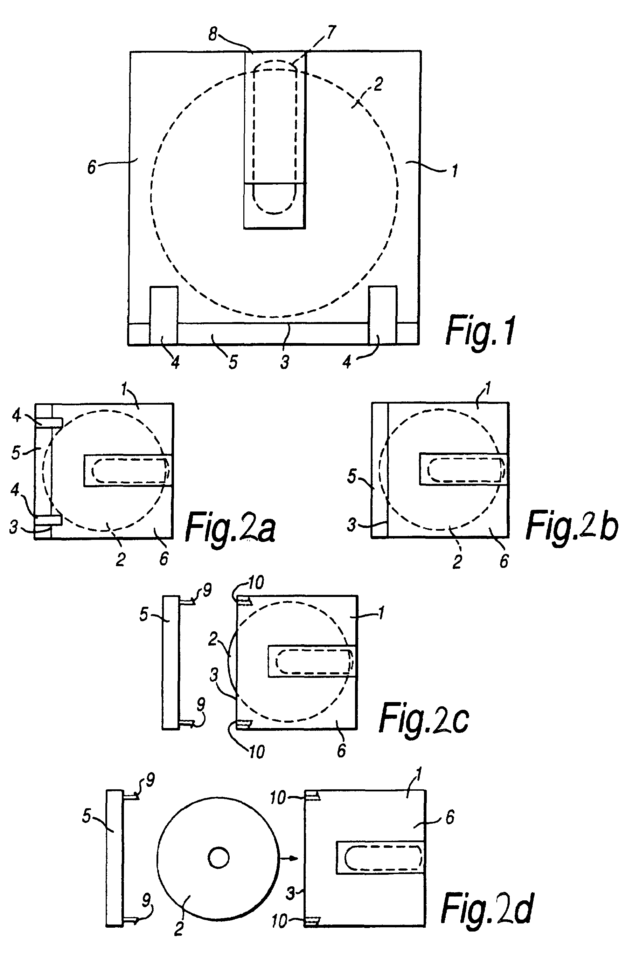

A first embodiment of a cartridge according to the present invention will now be described with reference to Figs. 1 to 3 of the drawings.

Fig. 1 depicts a cartridge 1 formed by a cartridge body 6 and a closure 5 for an opening 3 in the cartridge body. The cartridge 1 houses a recording medium in the form of a disk 2 for recording a signal required by a user. The cartridge is constructed to permit the disk 2 to be accessed through a window 7 for recording a signal when the cartridge is mounted in a signal recording apparatus. The opening 3 is provided in the cartridge for removing the disk 2 from the cartridge 1. An indicator in the form of adhesive tapes 4 which span the join between the cartridge body 6 and the closure 5. Removal or interference with the tapes 4 indicates whether there is a possibility that the disk 2 has been taken out of the cartridge. Preferably, the adhesive tape is highly light-reflectable or coloured or both. In this embodiment silver-coloured adhesive tape is used, however, the tape is not limited to being of a certain colour, such as a light-reflectable colour, as long as the presence of the tape on the cartridge can be automatically detected by a machine.

The adhesive tape has a structure such that once it is peeled off the cartridge 1, it never re-adheres to the cartridge so as to appear to be adhesive tape originally applied thereto. Instead of the above structure, or in addition thereto, when the adhesive tape 4 is once peeled off the cartridge 1, some indication of peeling off may be displayed.

Removing the closure 5 allows the user to remove the disk 2 from the cartridge body 6. The openable window 7 which is formed on the cartridge body 6 for exposing the housed disk 2 is closed by a movable shutter 8. When the cartridge is mounted into suitable apparatus, the shutter 8 is moved automatically to the side to open the window 7 and thus expose the disk 2.

Figs. 2(a) to 2(d) depict the process of removing the disk 2 from the cartridge 1 having the above structure.

Fig. 2(a) shows the cartridge body 6 fitted with the closure 5 and sealed with two strips of tape 4 and this is the normal condition that a user receives the disk which has never been removed from the cartridge from the time it has been shipped from the factory.

Fig. 2(b) depicts that the strips of adhesive tape 4 have been removed from the cartridge 1. Removing the adhesive tape 4 allows a user to remove the closure 5. Fig. 2(c) depicts that the closure 5 is released from the cartridge 1 whereby the closure 5 is totally separated from the cartridge body 6. In this embodiment, latches 9 disposed both ends of the closure 5 are released from cooperating recesses 10 disposed on the cartridge body 6 to allow the closure 5 to be removed from the cartridge body 6. Fig. 2(d) depicts the situation where the disk 2 is removed from the disk body 6.

The above construction allows the adhesive tape 4 sealing the closure 5 to indicate whether the disk 2 may have been removed from the cartridge body 6 or not. In other words, the indication is as a result of changing the condition of adhesive tape 4 from solid adhesion to both the cartridge body 6 and the closure 5 to a condition of being peeled off whereby to allow the disk to be removed from the cartridge body 6.

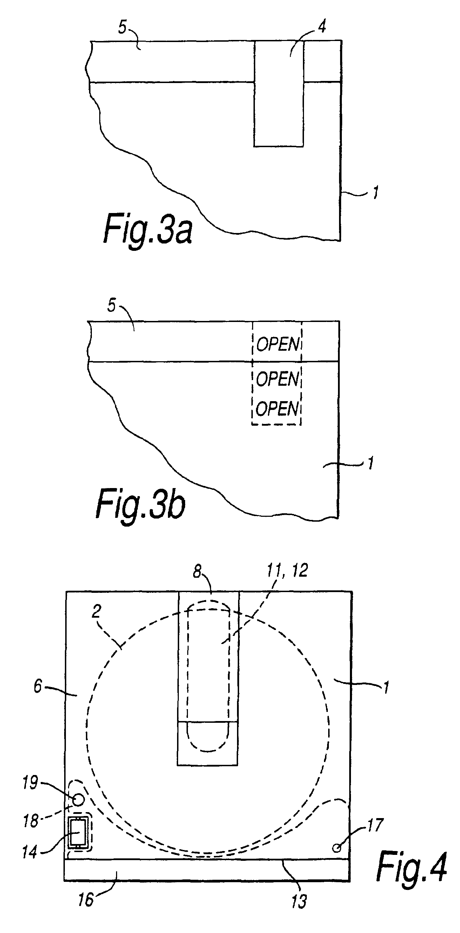

Once the disk 2 has been removed from the cartridge 1, or once the adhesive tape 4 has been peeled off the cartridge 1, the adhesive tape 4 never adheres again to the cartridge 1 in the same condition as the initial condition. Alternatively, or in addition, as Figs. 3(a) and 3(b) show, when the adhesive tape is peeled off, a portion of the cartridge under the tape 4 has an indication that the cartridge has been opened, e.g. that the adhesive tape has been peeled off. The indication is in the form of a message, e.g. the word OPEN or some other user recognizable visual indication.

Thanks to the above structure, a user who is going to use this cartridge 1 from now on can recognize whether the disk 2 housed in the cartridge 1 has possibly been removed from the cartridge 1 and can predict that the disk 2 may be contaminated by dust, or a fingerprint or it may have some other defect.

Fig. 1 shows that two pieces of adhesive tape are used; however, the number of pieces may be one or more. The message appearing when the adhesive tape 4 is peeled off is not limited to "OPEN". The message may be any letters or symbol or multiple or combination thereof so long as a user can identify that the adhesive tape has been peeled off and can understand that the disk 2 may have been removed from the cartridge 1.

In this embodiment, the cartridge body 6 and the closure 5 are constructed so as to be completely separable from each other. However, the cartridge body may be joined to the closure 5 in some convenient manner as long as the disk 2 can be removed from the cartridge 1 with the closure 5 in its open condition.

Another embodiment will now be described with reference to Figs. 4 to 6 of the accompanying drawings. The same components which have been described in the first embodiment and are present in the second embodiment are referred to by the same reference numerals and the description of such components is consequently omitted. The disk 2 on this embodiment is a double-sided disk.

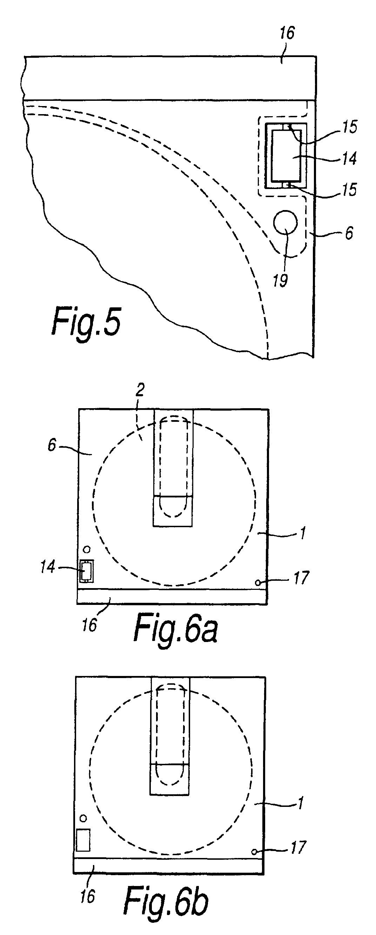

In Fig. 4, a first open window 11 is used for recording a signal onto one side of the disk 2 when it is mounted in suitable signal recording apparatus. A second openable window 12 is provided on the opposite side of the cartridge to the window 11 and has approximately the same shape as the window 11. The second openable window 12 is used for recording a signal onto the other side of the disk 2 when it is mounted in the signal recording apparatus. An opening 13 is provided on another face than those where the windows 11 and 12 are provided and the opening 13 is used when the disk is removed from the cartridge 1. A locking device in the form of a claw 14 locks a closure 16 for the opening 13 in position and indicates whether the disk 2 may have been removed from the cartridge 1 or not. As shown in Fig. 5, the claw 14 is connected to the cartridge body 6 by connections 15 at several points. In normal usage, as long as the claw 14 is joined the cartridge 6 by the connector 15, the claw 14 prevents the closure 16 from moving or rotating and the opening 13 thus cannot be opened for removal of the disk 2 from the cartridge 1.

The closure 16 covers the opening 13 and is pivotably mounted by a hinge 17 to the cartridge body 6. The hinge 17 is located at the first end of the closure 16 and the other end of the closure 16 has a latch 18 which engages a cooperating member 19 on the cartridge body 6 whereby to hold the closure 16 in a releasable manner over the opening 13.

Figs. 6(a) to 6(c) depict the procedure whereby the disk 2 may be removed from the cartridge which is shown in Figs 4 and 5.

Fig. 6(a) depicts the cartridge body 6 including the closure 16 with the locking device 14 in position. A user normally receives the cartridge 1 in this condition i.e. when the disk 2 has never been removed from the cartridge 1 after shipping from the factory.

Fig. 6(b) depicts the situation where the claw 14 has been removed. The connector 15 is cut by hand or with scissors and then the claw 14 is removed. In this embodiment, when the cartridge 1 is in the condition shown in Fig. 6(b), the latch 18 provided at the first end of the closure 16 is released from the cooperating member 19 which permits the closure 16 to be swung around the hinge 17 to expose the opening 13.

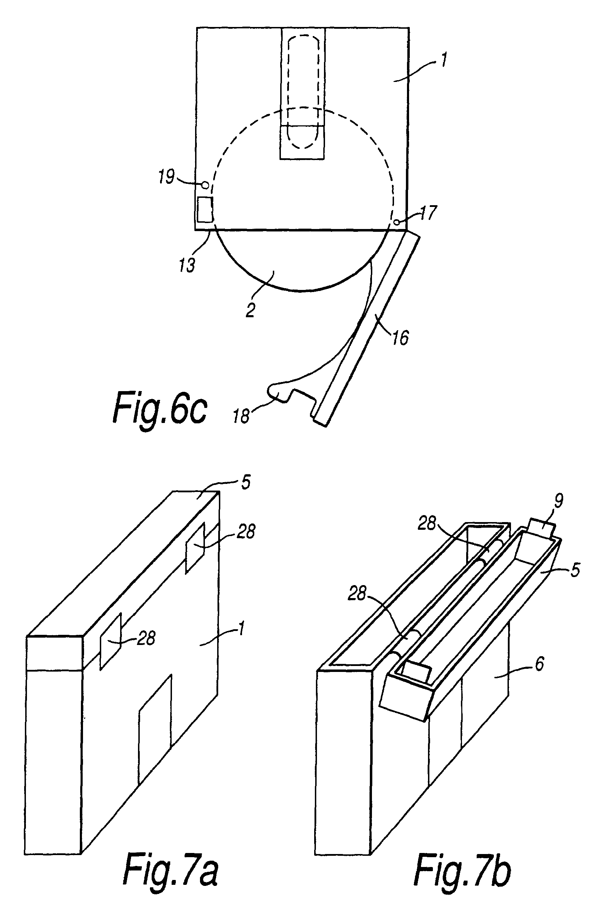

Fig. 6(c) depicts the situation where the closure 16 has been rotated around the hinge 17 to expose the opening 13 and allow the disk 2 to be removed.

The above structure allows a user to remove the disk 2 from the cartridge body 6. In other words, the means providing an indication whether the disk has possibly been removed from the cartridge body 6 or not is changed before the disk 2 is taken out. Namely, the locking means in the form of the claw 14 is removed. This condition allows a user to remove the disk 2 from the cartridge body 6.

Due to the above structure, namely the connector 15 being cut to allow removal of the claw 14, a user who is going to use this cartridge 1 from now on can recognize whether the disk 2 housed in the cartridge 1 may have been removed from the cartridge 1 or not and the user can thus expect the disk to be stained with dust or fingerprint or it may have some other defect.

In the above structure, since the opening 13 for removal of the disk 2 is provided on another face of the cartridge from those faces where the first and second windows 11, 12 for recording a signal onto each side of the disk are provided, the first window 11 and the second window 12 can have approximately the same shape and disposition. Therefore a signal recording apparatus handling the cartridge requires no special structure for accessing both sides of the disk.

In this embodiment, the first window 11 and the second window 12 are provided for recording and/or reproducing a signal to/from both sides of the disk 2. However, when either side of the disk is used, or only one side of the disk is used, it is sufficient to provide one window.

Further, the cartridge body, the claw 14 and the connectors 15 can be integrated into one body by moulding with a resin. The cartridge 1 can thus be manufactured easily.

Also, the closure 16 can be removed completely from the cartridge body 6. Fig. 7, however, shows an alternative closure construction which can be applied to either the first or the second embodiment. As shown in Fig. 7(b), the closure 5 or 16 is not completely removed and may remain joined to the cartridge body 6 as long as the disk 2 can be removed from the cartridge 1. Fig. 7(a) shows the closure 5 on position on the cartridge body 6 and Fig. 7(b) depicts the closure 5 released from the cartridge body 6 but still joined thereto by flexible hinge strips 28. As far as the second embodiment is concerned, the hinge strips 28 would thus replace the hinge 17 at the end of the closure 16.

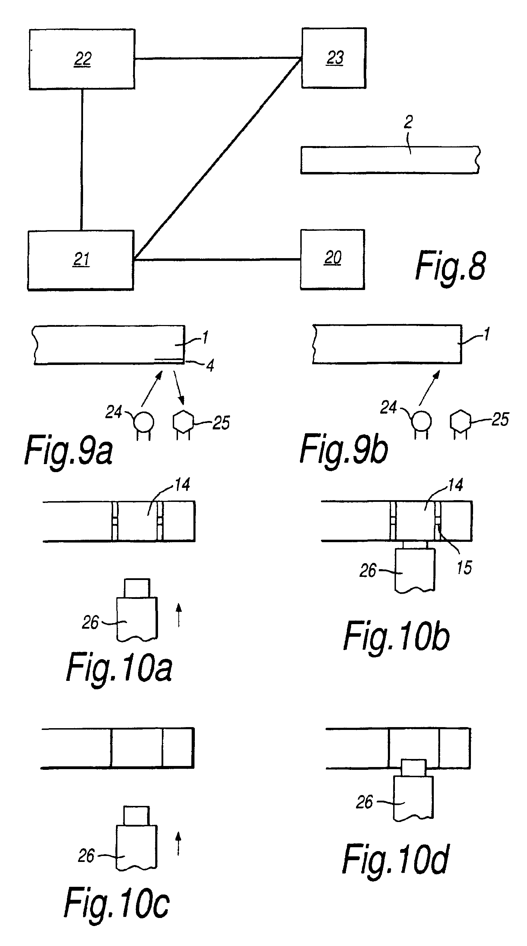

A signal recording apparatus for handling the cartridge of the present invention will now be described with reference to Fig. 8. When the same components as used in the previous figures appear, the same reference numbers will be used and a detailed description of the components will be omitted.

In Fig. 8, a detector 20 detects the condition of an indicator, the adhesive tape 4 or the claw 14, and thereby determines whether the disk 2 has been removed from the cartridge 1 or not. The detector 20 can thus be either a non-contact detector or a contact device as will be explained in more detail later. A monitoring device 21 searches the disk for defects via a pickup 23 when the detector 20 determines that there is a possibility that the disk 2 has been taken out of the cartridge 1. A recording device 22 responsive to the monitoring device 21 records a signal onto the disk 2 via the pickup 23.

As indicated above, the detector 20 is designed having regard to whether the indicator is the adhesive tape 4 or the claw 14. These two different designs of detector will now be described.

### (1) The detector 20 for detecting the adhesive tape 4 (tape coloured silver).

As shown in Fig. 9, the detector 20 of the signal recording apparatus comprises a non-contact device in the form of a light emitting element 24 which emits light onto the tape 4, and a light receiving element 15 which receives light reflected therefrom.

Fig. 9(a) depicts the situation where the disk 2 has never been removed from the cartridge 1. Emitted light from the element 24 is reflected by the adhesive tape 4 attached to the cartridge 1 and the reflected light is received by the light receiving element 25. When the detector 20 of the signal recording apparatus identifies that the received luminous energy is more than a certain amount, this is taken to prove that the disk 2 housed in the cartridge 1 has never been removed therefrom.

Fig. 9(b) depicts a situation where the disk 2 may have been removed from the cartridge 1. Since the adhesive tape 4 is not attached to the cartridge 1, the light emitted from the element 24 and received by the element 25 is different to the amount of light received when the tape is present and hence the detector 20 cannot identify that the reflected luminous energy received by the element 25 is more than the certain level. This is taken to indicate that the disk 2 may have been removed from the cartridge 1.

If a non-reflectable material, preferably of black or light absorbing colour, is used in the region of the cartridge where the tape 4 should be, either on the cartridge body 6 or the closure or both, more effective prevention of errors can be expected.

Another non-contact method of detection can be used. A material of a different light reflectance from the material of the surface of the cartridge body 6 or the surface of the closure 5 can be used for the adhesive tape 4 as can different colours with appropriate filters if required. It is not necessary that the light reflectance of the indicator is higher than the light reflectance of the cartridge or closure. It is equally possible for the indicator to be of lower light reflectance than the cartridge. What is important, is that light emitted from the element 24 is reflected in different amounts by the adhesive tape and by the surface of the cartridge or closure. The detector 20 of the signal recording apparatus detects the difference through the light receiving element 25. Identification can thus take place as to whether the disk 2 may have been removed from the cartridge 1 or not.

### (2) Detector 20 for detecting the claw 14.

As shown in Fig. 10, the detector 20 of the signal recording apparatus which utilizes a contact-type detection, comprises a switch 26 for identifying whether the disk 2 has possibly been taken out of the cartridge 1.

Figs. 10(a) and 10(b) depict the situation where the disk has never been taken out of the cartridge 1. In other words, the claw 14 is still present on the cartridge 1. The switch 26 is moved upwardly from its normal rest position as shown in Fig. 10(a) to a specified position ready for detecting as shown in Fig. 10(b). The switch 26 hits the claw 14 and is activated. The detector 20 thereby identifies that the disk has never been removed from the cartridge 1.

Figs. 10(c) and 10(d) depict the situation where the disk may possibly have been taken out of the cartridge 1. The detector 20 moves upwardly from its normal rest position as shown in Fig. 10(c) to the specified position as shown in Fig. 10(d) ready for detecting. The switch 26 does not contact anything and so it is not activated. The detector 20 thereby identifies that the disk 2 may have been taken out of the cartridge 1 because the claw is not present and thus the closure of the cartridge body may have been opened.

A more detailed description of the operation of the signal recording apparatus using the cartridge as mentioned in one of the embodiments above will now be described.

When the disk 2 has never been taken out of the cartridge 1, the adhesive tape 4 or claw 14 is still present on the cartridge 1 and the detector 20 detects its presence to identify that the disk has never been removed from the cartridge 1. Then, the monitoring device 21 does not search the disk for defects and the recorder 22 is activated to record a signal through the pickup 23 in the normal manner of the signal recording apparatus.

When the disk 2 may have been removed from the cartridge 1, the adhesive tape 4 or claw 14 is not present on the cartridge 1 and the detector 20 detects this to identify the possibility that the disk 2 may have been removed from the cartridge 1. In this case, the monitoring device 21 starts searching the disk for defects and based on the search result, the recorder 22 records a signal on the disk except for detected defective locations. In this case, a recording operation can be, of course, prohibited.

The above structure allows a user and the apparatus to recognize contamination due to dust, fingerprints or other defects on the disk which are present due to the disk having been removed from the cartridge 1. The apparatus can thus record a signal on the disk without gaining access to such defective locations. In other words, this structure allows the apparatus to avoid recording a signal on defective locations or repeatedly going back to the same location because of recording on defective locations thereby reducing access time to the disk 2.

An electronics apparatus for checking a cartridge of the type described above will now be described with reference to Fig. 11 of the drawings. The same components described in the figures above are allocated the same reference numbers in the following description and detailed explanation of such components is omitted.

In Fig. 11, a display 27 such as a CRT or LCD displays an indication of the non-recordable capacity, recordable capacity or both of the disk based on the search result of the monitoring device 21. The display 27 may be separated from but connected directly or indirectly to the signal recording apparatus described above or may be incorporated therein. The operation of the electronics apparatus as shown in Figure 11 will now be described.

In operation, when the disk 2 has never been taken out of the cartridge 1, the detector 20 detects the presence of adhesive tape 4 or claw 14 on the cartridge 1 to determine that the disk 2 has never been taken out of the cartridge 1. Base on this judgement, the display 27 indicates a normal recordable capacity.

When the disk 2 may have been taken out of the cartridge 1, the detector 20 detects that the adhesive tape 4 or claw 14 is not present to indicate the possibility that the disk 2 may have been taken out of the cartridge 1. Based on this judgement, the monitoring device 21 searches the disk for non-recordable locations or recordable locations. Based on the search result, the display shows the recordable capacity or the non-recordable capacity of the disk or both of them.

A preferred embodiment of the monitoring device 21 will now be described. The pickup 23 records an information signal onto the entire disk. The information signal includes a code for error correction and an error can be detected when the information signal is regenerated. When a detected error cannot be corrected or it can be corrected but it exceeds a specified range, the sector or location where the error is detected is deemed not usable, and the information that the sector cannot be used is recorded in a specified location on the disk 2.

Displaying this recorded information on the display 27 gives a user notice of the recordable capacity of the disk 2. This operation is available for each track or each sector of the disk 2 thereby non-recordable or recordable sectors or tracks can be recorded in the specified location on the disk 2 and used to control the recording operation on the disk 2.

When the disk 2 is an optical disk, a laser is generally used for recording and reproducing the data signal. In order to store an information signal on the optical disk under optical conditions, the acceptable output range of laser is necessarily narrow. For example, in the case of a commercially available recordable optical disk, the optimum output range of the laser should not be more than 10% with respect to the centre value of the power. When recording an information signal within this range, the error rate will not exceed a specified range (e.g. not more than 0.00001). When reproducing a recorded information signal, however, the error rate does not exceed the specified range even if the laser output for reproduction varies by as much as 50% (e.g. not more than 0.00001). It is thus known that an acceptable range of laser output for recording must be narrow while that for reproduction can be wider without affecting the error rate. In other words, once an information signal is recorded, it can safely be reproduced even if a fingerprint, stain or other contamination exists on the surface of the optical disk. On the other hand, if a fingerprint or stain or other contamination exists on the optical disk before recording of the information signal, it is difficult to record accurately. Accordingly, after recording a signal onto the optical disk, it is possible to remove the optical disk from the cartridge and load it into reproducing apparatus to reproduce the signal.

An optical disk once taken out of the cartridge 1 can be loaded again into the cartridge 1 for recording a signal with the signal recording apparatus. In this case, as explained above, the apparatus searches the disk for a recordable location before recording the signal. The above structure allows a user to recognize that he or she is using a disk which may be subject to defects due to having been removed from the cartridge 1 and thus able to recognize that the recordable capacity of the disk may have been affected.

## Claims

1. A cartridge comprising a cartridge body (6) housing a recording medium (2) therein and being so structured as to permit recording of a signal onto said recording medium without removal of the medium from said cartridge body when said recording medium is loaded into a signal recording apparatus, and an opening (3) provided on said cartridge body (6) for removal of said recording medium from said cartridge body, **characterised in that** the cartridge includes an indicator (4) for indicating whether said recording medium (2) has not been removed from said cartridge and reinserted.

2. A cartridge according to claim 1, wherein the cartridge body (6) further comprises a closure (5) for covering the opening (3) in the cartridge body.

3. A cartridge according to claim 1 or 2, wherein the cartridge body (6) has a first openable window (7,11) for permitting recording a signal onto said recording medium when said recording medium is loaded into a signal recording apparatus and a second openable window (12) having approximately the same shape as the first window (7,11) and being provided at opposite sides of said body (6) to said first window (7,11) for permitting recording a signal on the opposite side of said recording medium when said recording medium is loaded into the signal recording apparatus, the opening (3) being provided on a different side of said body (6) from those of the first and second windows.

4. A cartridge according to claim 1, 2 or 3, wherein said closure (5) changes a condition of said indicator when a user is able to remove said recording medium (2) from said cartridge body.

5. A cartridge according to any one of the preceding claims, wherein said indicator is in the form of an adhesive tape (4) crossing said cartridge body (6) and said closure (5), said adhesive tape (4) being incapable of being re-applied once peeled off and peeling off of said adhesive (4) allowing a user to remove said recording medium (2) from said cartridge body (6).

6. A cartridge according to claim 5, wherein a part of said adhesive tape (4) remains on said cartridge after being peeled off, whereby to provide an indication to a user that said recording medium (2) may have been removed from said cartridge body (6).

7. A cartridge according to claim 6, wherein the surface of said adhesive tape (4) has a different reflective property to that of said cartridge body (6) or said closure (5).

8. A cartridge according to any one of claims 1 to 4, wherein the indicator is in the form of a detachable claw (14) mounted to said cartridge, detaching said claw (14) from said cartridge allowing a user to remove said recording medium (2) from said cartridge body (6).

9. A cartridge according to claim 8, wherein said claw (14) and the associated part of said cartridge are integrally moulded using a resin.

10. A signal recording apparatus comprising a detector (20) for detecting the condition of the indicator on a cartridge according to any one of claims 1 to 9, whereby to determine whether said recording medium (2) has not been removed from said cartridge and reinserted, a monitoring device (21) responsive to said detector (20) for searching said medium (2) for defects when said detector (20) determines that said recording medium may have been removed from said cartridge, and a recording device. (23) for recording a signal onto said recording medium, said signal recording medium apparatus being so structured as not to record the signal onto a defective area of said recording medium.

11. An apparatus according to claim 10 further comprising a display (27) for displaying one of a recordable capacity, non-recordable capacity or both of them of said recording medium based on the result produced by said monitoring device (21).

12. A signal recording apparatus according to claim 10 or 11, wherein the detector is a non-contact detector device.

13. A signal recording apparatus according to claim 10 or 11, wherein the detector is a switch device arranged to contact the indicator (14) of the cartridge.

14. An electronics apparatus comprising a detector (20) for detecting the condition of the indicator on a cartridge according to any one of claims 1 to 9, whereby to determine whether said recording medium has not been removed from said cartridge and reinserted, a monitoring device (21) responsive to said detector (20) for searching said medium (2) for defects when said detector (20) determines that said recording medium have been been removed from said cartridge, and an display (27) for displaying one of a recordable capacity, non-recordable capacity, or both of them of said recording medium based on the search result by said monitoring device (21).

## Patentansprüche

1. Kassette, die einen Kassettenkörper (3), der ein Aufzeichnungsmedium (2) aufnimmt und so aufgebaut ist, dass der das Aufzeichnen eines Signals auf das Aufzeichnungsmedium ohne Entnehmen des Mediums aus dem Kassettenkörper ermöglicht, wenn das Aufzeichnungsmedium in eine Signalaufzeichnungsvomchtung eingelegt wird, und eine Öffnung (3) umfasst, die an dem Kassettenkörper (2) vorhanden ist, um das Aufzeichnungsmedium aus dem Kassettenkörper zu entnehmen, **dadurch gekennzeichnet, dass** die Kassette eine Anzeigeeinrichtung (4) enthält, die anzeigt, ob das Aufzeichnungsmedium (2) nicht aus der Kassette entnommen und wieder eingeführt wurde.

2. Kassette nach Anspruch 1, wobei der Kassettenkörper (6) des Weiteren einen Verschluss (5) umfasst, der die Öffnung (3) in dem Kassettenkörper abdeckt.

3. Kassette nach Anspruch 1 oder 2, wobei der Kassettenkörper (6) ein erstes zu öffnendes Fenster (7, 11), das das Aufzeichnen eines Signals auf das Aufzeichnungsmedium ermöglicht, wenn das Aufzeichnungsmedium in eine Signalaufzeichnungsvorrichtung eingelegt ist, sowie ein zweites zu öffnendes Fenster (12) aufweist, das ungefähr die gleiche Form hat wie das erste Fenster (7, 11) und das an dem ersten Fenster (7,11) gegenüberliegenden Seiten des Körpers (6) vorhanden ist, um Aufzeichnen eines Signals auf die gegenüberliegende Seite des Aufzeichnungsmediums zu ermöglichen, wenn das Aufzeichnungsmedium in die Signalaufzeichnungsvorrichtung eingelegt ist, wobei die Öffnung (3) auf einer anderen Seite des Körpers (6) als das erste und das zweite Fenster vorhanden ist.

4. Kassette nach Anspruch 1, 2 oder 3, wobei der Verschluss (5) einen Zustand der Anzeigeeinrichtung verändert, wenn ein Benutzer das Aufzeichnungsmedium (2) aus dem Kassettenkörper entnehmen kann.

5. Kassette nach einem der vorangehenden Ansprüche, wobei die Anzeigeeinrichtung die Form eines Klebebandes (4), das sich quer über den Kassettenkörper (6) und den Verschluss (5) erstreckt, wobei das Klebeband (4), wenn es abgezogen worden ist, nicht erneut aufgebracht werden kann, und das Abziehen des Klebebandes (4) es dem Benutzer ermöglicht, das Aufzeichnungsmedium (2) aus dem Kassettenkörper (6) zu entnehmen.

6. Kassette nach Anspruch 5, wobei ein Teil des Klebebandes (4) nach dem Abziehen auf der Kassette verbleibt, so dass einem Benutzer angezeigt wird, dass das Aufzeichnungsmedium (2) möglicherweise auf dem Kassettenkörper (6) entnommen worden ist.

7. Kassette nach Anspruch 6, wobei die Oberfläche des Klebebandes (4) ein anderes Reflektionsverhalten aufweist, als der Kassettenkörper (6) oder der Verschluss (5).

8. Kassette nach einem der Ansprüche 1 bis 4, wobei die Anzeigeeinrichtung die Form einer lösbaren Klaue (14) hat, die an der Kassette angebracht ist, und wobei es das Lösen der Klaue (14) von der Kassette einem Benutzer ermöglicht, das Aufzeichnungsmedium (2) aus dem Kassettenkörper (6) zu entnehmen.

9. Kassette nach Anspruch 8, wobei die Klaue (14) und der dazugehörige Teil der Kassette unter Verwendung eines Kunststoffs integral geformt werden.

10. Signalaufzeichnungsvorrichtung, die einen Detektor (20), der den Zustand der Anzeigeeinrichtung an einer Kassette nach einem der Ansprüche 1 bis 9 erfasst, um so festzustellen, ob das Aufzeichnungsmedium (2) nicht aus der Kassette entnommen und wieder eingeführt worden ist, eine Überwachungsvorrichtung (21), die auf den Detektor (20) anspricht und das Medium (2) auf Fehler absucht, wenn der Detektor (20) feststellt, dass das Aufzeichnungsmedium möglicherweise aus der Kassette entnommen worden ist, sowie eine Aufzeichnungsvorrichtung (23) umfasst, die ein Signal auf das Aufzeichnungsmedium aufzeichnet, wobei die Signalaufzeichnungsvorrichtung so aufgebaut ist, dass sie das Signal nicht auf einen fehlerhaften Bereich des Aufzeichnungsmediums aufzeichnet.

11. Vorrichtung nach Anspruch 10, die des Weiteren eine Anzeige (27) umfasst, die auf der Grundlage des von der Überwachungsvorrichtung (21) erzeugten Ergebnisses eine Möglichkeit des Aufzeichnens auf das Aufzeichnungsmedium, eine Unmöglichkeit des Aufzeichnens oder beides anzeigt.

12. Signalaufzeichnungsvorrichtung nach Anspruch 10 oder 11, wobei es sich bei dem Detektor um eine kontaktlose Detektorvorrichtung handelt.

13. Signalaufzeichnungsvorrichtung nach Anspruch 10 oder 11, wobei es sich bei dem Detektor um eine Schaltvorrichtung handelt, die mit der Anzeigeeinrichtung (14) der Kassette in Kontakt kommt.

14. Elektronische Vorrichtung, die einen Detektor (20), der den Zustand der Anzeigeeinrichtung einer Kassette nach einem der Ansprüche 1 bis 9 erfasst, um so festzustellen, ob das Aufzeichnungsmedium nicht aus der Kassette entnommen und wieder eingeführt worden ist, eine Überwachungsvorrichtung (21), die auf den Detektor (20) anspricht und das Medium (2) nach Fehlern absucht, wenn der Detektor (20) feststellt, dass das Aufzeichnungsmedium aus der Kassette entnommen worden ist, und eine Anzeige (27) umfasst, die auf der Grundlage des Suchergebnisses der Überwachungsvorrichtung (21) eine Möglichkeit des Aufzeichnens auf das Aufzeichnungsmedium, eine Unmöglichkeit des Aufzeichnens oder beides anzeigt.

## Revendications

1. Cassette comportant un corps de cassette (6) logeant un support d'enregistrement (2) et étant structurée de manière à permettre l'enregistrement sur ledit support d'enregistrement sans retrait du support hors dudit corps de cassette lorsque ledit support d'enregistrement est chargé dans un dispositif d'enregistrement de signaux, et une ouverture (3) prévue sur ledit corps de cassette (6) pour retirer ledit support d'enregistrement dudit corps de cassette, **caractérisée en ce que** la cassette comporte un témoin (4) servant à indiquer si ledit support d'enregistrement (2) n'a pas été retiré de ladite cassette et réinséré.

2. Cassette selon la revendication 1, dans laquelle le corps de cassette (6) comprend en outre un dispositif de fermeture (5) pour recouvrir l'ouverture (3) dans le corps de cassette.

3. Cassette selon la revendication 1 ou 2, dans laquelle le corps de cassette (6) possède une première fenêtre (7, 11) pouvant être ouverte, pour permettre l'enregistrement d'un signal sur ledit support d'enregistrement lorsque ledit support d'enregistrement est chargé dans un dispositif d'enregistrement de signaux, et une seconde fenêtre (12) pouvant être ouverte, possédant approximativement la même forme que la première fenêtre (9, 11) et prévue sur le côté opposé dudit corps (6) par rapport à ladite première fenêtre (9, 11) pour permettre l'enregistrement d'un signal sur le côté opposé dudit support d'enregistrement lorsque ledit support d'enregistrement est chargé dans le dispositif d'enregistrement de signaux, l'ouverture (3) étant prévue sur un côté dudit corps (6) différent de celui des première et seconde fenêtres.

4. Cassette selon la revendication 1, 2 ou 3, dans laquelle ledit dispositif de fermeture (5) modifie une condition dudit témoin lorsqu'un utilisateur peut retirer ledit support d'enregistrement (2) dudit corps de cassette.

5. Cassette selon l'une quelconque des revendications précédentes, dans laquelle ledit témoin se présente sous la forme d'une bande adhésive (4) qui est disposée en travers dudit corps de cassette (6) et dudit dispositif de fermeture (5), ladite bande adhésive (4) ne pouvant pas être à nouveau appliquée après qu'elle a été détachée, et le détachement dudit adhésif (4) permettant à l'utilisateur de retirer ledit support d'enregistrement (2) dudit corps de cassette (6).

6. Cassette selon la revendication 5, dans laquelle une partie de ladite bande adhésive (4) reste sur ladite cassette après avoir été détachée, ce qui fournit à un utilisateur une indication du fait que ledit support d'enregistrement (2) peut avoir été retiré dudit corps de cassette (6).

7. Cassette selon la revendication 6, dans laquelle la surface de ladite bande adhésive (4) possède une caractéristique réfléchissante différente de celle dudit corps de cassette (6) ou dudit dispositif de fermeture (5).

8. Cassette selon l'une quelconque des revendications 1 à 4, dans lequel le témoin se présente sous la forme d'une griffe (14) montée sur ladite cassette, le détachement de ladite griffe (14) à partir de ladite cassette permettant à un utilisateur de retirer ledit support d'enregistrement (2) dudit corps de cassette (6).

9. Cassette selon la revendication 8, dans laquelle ladite griffe (14) et la partie associée de ladite cassette sont moulées d'un seul tenant moyennant l'utilisation d'une résine.

10. Dispositif d'enregistrement de signaux comprenant un détecteur (20) servant à détecter la position du témoin sur une cassette selon l'une quelconque des revendications 1 à 9, dans lequel pour déterminer si le support d'enregistrement (2) n'a pas été retiré de ladite cassette et réinséré, il est prévu un dispositif de contrôle (21) apte à répondre audit détecteur (20) pour rechercher des défauts dans ledit support (2) lorsque ledit détecteur (20) établit que ledit support d'enregistrement a été retiré de ladite cassette, et un dispositif d'enregistrement (23) pour enregistrer un signal sur ledit support d'enregistrement, ledit dispositif à support d'enregistrement de signaux étant structuré de manière à ne pas enregistrer le signal sur une zone défectueuse dudit support d'enregistrement.

11. Dispositif selon la revendication 10, comprenant en outre un dispositif d'affichage (27) pour afficher l'une d'une capacité d'enregistrement, d'une capacité de non enregistrement dudit support d'enregistrement ou les deux, sur la base du résultat produit par le dispositif de contrôle (21).

12. Dispositif d'enregistrement de signaux selon la revendication 10 ou 11, dans lequel le détecteur est un dispositif de détection sans contact.

13. Dispositif d'enregistrement de signaux selon la revendication 10 ou 11, dans lequel le détecteur est un dispositif de commutation agencé de manière à établir un contact avec le témoin (14) de la cassette.

14. Dispositif électronique comprenant un détecteur (20) pour détecter la condition du témoin dans une cassette selon l'une quelconque des revendications 1 à 9, dans lequel il est prévu un dispositif de contrôle pour déterminer si ledit support d'enregistrement n'a pas été retiré de ladite cartouche et réinséré, un dispositif de contrôle (21) apte à répondre audit détecteur (20) pour rechercher des défauts dans ledit support (2) lorsque ledit détecteur (20) a établi que ledit support d'enregistrement a été retiré de ladite cassette, et un dispositif d'affichage (27) pour afficher l'une d'une capacité d'enregistrement, d'une non capacité d'enregistrement dudit support d'enregistrement ou les deux, sur la base du résultat de la recherche par ledit dispositif de contrôle (21).
